# EUROPÄISCHE PATENTANMELDUNG

(11) **EP 3 796 192 A1**
(43) Veröffentlichungstag der Anmeldung: **24.03.2021**
(21) Anmeldenummer: 19198699.1
(22) Anmeldetag: 20.09.2019
(51) Int. Cl.: G06F 21/10, G06Q 10/06

(54) **VERFAHREN, VORRICHTUNG UND SYSTEM ZUM BEREITSTELLEN EINES ANWENDUNGSPROGRAMMS**

(71) Anmelder: aConTech GmbH, 90768 Fürth (DE)
(72) Erfinder: Zenkel, Stefan, 90768 Fürth (DE)
(74) Vertreter: Isarpatent

(57) **Zusammenfassung**

Die Erfindung betrifft ein computerimplementiertes Verfahren zum Bereitstellen eines Anwendungsprogramms an eine Vielzahl von Usern (311-31i, 3nl-3nj), mit den Schritten: Ermitteln von Aktivitäten der Vielzahl von Usern (311-31i, 3n1-3nj); Prognostizieren eines Nutzungsverhaltens der User (311-31i, 3nl-3nj) bezüglich des Anwendungsprogramms anhand der ermittelten Aktivitäten der User (311-31i, 3n1-3nj); und Anfordern einer Bereitstellung des Anwendungsprogramms für die User (311-31i, 3n1-3nj) in Abhängigkeit von dem prognostizierten Nutzungsverhalten der User (311-31i, 3n1-3nj).

## Beschreibung

Die Erfindung betrifft ein computerimplementiertes Verfahren zum Bereitstellen eines Anwendungsprogramms an eine Vielzahl von Usern, eine entsprechende Vorrichtung zum Anfordern einer Bereitstellung eines Anwendungsprogramms an eine Vielzahl von Usern, und ein System zum Bereitstellen eines Anwendungsprogramms an eine Vielzahl von Usern. Die Erfindung betrifft weiter ein Computerprogrammprodukt und ein nichtflüchtiges, computerlesbares Speichermedium zum Ausführen des Verfahrens.

### Stand der Technik

Klassische Lizenzierungsverfahren für Computerprogramme umfassen die Vergabe von userbasierten Lizenzen, etwa für klassische Office-Anwendungen, welche für einen bestimmten User vergeben werden. Hardwarebasierte Lizenzen finden sich insbesondere im Bereich von Datenbankensystemen. Häufig werden Daten jedoch nicht mehr lokal gespeichert, sondern über Cloud Computing oder Software as a Service (SaaS) bedarfsgerecht bereitgestellt. Einzelne oder auch alle Rechenvorgänge werden in die Cloud ausgelagert, sodass rechenintensive Hardwarekomponenten auf Userseite nicht mehr benötigt werden oder anderweitig verwendet können.

Häufig werden Lizenzen jedoch relativ statisch in Verträgen mit bestimmter Mindestlaufzeit vergeben, wobei lediglich die Lizenzanzahl nach oben angepasst werden kann. Die Lizenzen werden fest für den gesamten Vertragszeitraum gebucht und oftmals vorab bezahlt. Um den spezifischen Anforderungen der User entgegenzukommen, besteht jedoch ein Bedarf an speziell angepassten Abrechnungsverfahren. Insbesondere können User, welche bestimmte Anwendungsprogramme nur in geringem Umfang nutzen, und daher vor den Lizenzkosten zurückschrecken, durch zeitlich flexiblere Abrechnungsverfahren zum Kauf einer Lizenz bewegt werden.

Ein nutzungsbasiertes Abrechnungsverfahren für bereitgestellte Software ist aus der EP 1232456 A1 bekannt, wobei die Verwendung von Software-Modulen bei einem Kunden überwacht wird und wobei dem Kunden in Abhängigkeit von der Überwachung die Verwendung der Software in Rechnung gestellt wird.

Das genannte Verfahren ermöglicht zwar eine zeitgenaue Abrechnung, erlaubt jedoch keine vorausschauende Lizenzvergabe, welche den tatsächlichen zukünftigen Bedarf berücksichtigt. Somit besteht Bedarf an einer dynamischen Verwaltung von Lizenzen, welche das zu erwartende Nutzungsverhalten der User berücksichtigt.

Weiter besteht aus technischer Sicht ein Bedarf daran, die Lizenzvergabe zu vereinfachen und die tatsächliche Nutzung zu berücksichtigen, um die erforderliche Datenübertragung zwischen User, Distributor und Anbieter der Anwendungsprogramme zu vereinfachen.

### Zusammenfassung der Erfindung

Die genannten Aufgaben werden durch ein computerimplementiertes Verfahren zum Bereitstellen eines Anwendungsprogrammen eine Vielzahl von Usern mit den Merkmalen des Patentanspruchs 1, eine Vorrichtung zum Anfordern einer Bereitstellung eines Anwendungsprogramms an eine Vielzahl von Usern mit den Merkmalen des Patentanspruchs 12 und ein System zum Bereitstellen eines Anwendungsprogramms an eine Vielzahl von Usern mit den Merkmalen des Patentanspruchs 13 gelöst. Weiter stellt die Erfindung ein Computerprogrammprodukt mit den Merkmalen des Patentanspruchs 14 und ein nichtflüchtiges, computerlesbares Speichermedium mit den Merkmalen des Patentanspruchs 15 bereit.

Gemäß einem ersten Aspekt betrifft die Erfindung ein computerimplementiertes Verfahren zum Bereitstellen eines Anwendungsprogramms an eine Vielzahl von Usern. Aktivitäten der Vielzahl von Usern werden ermittelt. Das Nutzungsverhalten der User bezüglich des Anwendungsprogramms wird anhand der ermittelten Aktivitäten der User prognostiziert. Eine Bereitstellung des Anwendungsprogramms für die User wird in Abhängigkeit von dem prognostizierten Nutzungsverhalten der User angefordert.

Gemäß einem zweiten Aspekt betrifft die Erfindung eine Vorrichtung zum Anfordern einer Bereitstellung eines Anwendungsprogramms an eine Vielzahl von Usern, mit einer Schnittstelle und einer Recheneinrichtung. Die Schnittstelle ist zum Empfangen von Daten bezüglich einer Vielzahl von Usern ausgebildet. Die Recheneinrichtung ermittelt Aktivitäten der Vielzahl von Usern anhand der über die Schnittstelle empfangenen Daten. Die Recheneinrichtung prognostiziert weiter ein Nutzungsverhaltens der User bezüglich des Anwendungsprogramms anhand der ermittelten Aktivitäten der User. Die Recheneinrichtung fordert eine Bereitstellung des Anwendungsprogramms für die User in Abhängigkeit von dem prognostizierten Nutzungsverhalten der User an.

Gemäß einem dritten Aspekt betrifft die Erfindung ein System zum Bereitstellen eines Anwendungsprogramms an eine Vielzahl von Usern. Das System umfasst mindestens eine Vorrichtung zum Anfordern einer Bereitstellung eines Anwendungsprogramms an eine Vielzahl von Usern. Das System umfasst weiter einen Server, welcher mit der Vorrichtung kommuniziert. Die Vorrichtung fordert die Bereitstellung des Anwendungsprogramms für die User in Abhängigkeit von dem prognostizierten Nutzungsverhalten der User bei dem Server an. Der Server stellt das Anwendungsprogramm den Usern wie von der Vorrichtung angefordert bereit.

### Vorteile der Erfindung

Erfindungsgemäß wird ein Nutzungsverhalten der User automatisch prognostiziert, sodass nur tatsächlich benötigten Lizenzen angefragt werden. Insbesondere bei Anbietern, welche lediglich die Buchung im Voraus zulassen, kann dadurch eine Überbuchung verhindert werden. Die Erfindung ermöglicht es beispielsweise, Lizenzen tagesgenau zu buchen, zu nutzen und zu stornieren. In einem Pay-as-you-go-Verfahren kann beispielweise monatlich der tatsächlich erfolgte Verbrauch in Rechnung gestellt werden.

Allgemein wird die Planbarkeit verbessert, da etwa auf Anbieterseite die Bereitstellung und Reservierung möglicher Ressourcen genauer prognostiziert werden kann, da die Anzahl der angefragten Lizenzen auch im Wesentlichen der Anzahl der tatsächlich verwendeten Lizenzen entspricht. Weiter kann insbesondere bei cloudbasierten Systemen die Kommunikation und der Datenaustausch zwischen Usern, gegebenenfalls einem Distributor, und dem Anbieter vereinfacht werden, falls die Anzahl der angeforderten Lizenzen bereits im Voraus prognostiziert wird und dadurch deutlich besser mit den tatsächlich bereitzustellenden Instanzen des Anwendungsprogramms korreliert.

Unter einem "Ermitteln von Aktivitäten" soll im Rahmen dieser Erfindung das Erfassen von vergangenen, gegenwärtigen und/oder zukünftigen Aktivitäten verstanden werden. Insbesondere sind hierunter also auch geplante Aktivitäten zu verstehen, welche etwa direkt von den Usern angegeben werden können.

Unter "Aktivitäten" kann die Art der Verwendung des Anwendungsprogramms verstanden werden, insbesondere die zeitliche Verwendung, d.h. die Angabe eines Zeitbereichs, in welchem der User auf das Anwendungsprogramm zugreifen möchte. Weiter kann die Anwesenheit und/oder Abwesenheit als "Aktivität" der User verstanden werden.

Gemäß einer weiteren Ausführungsform des Verfahrens zum Bereitstellen eines Anwendungsprogramms an eine Vielzahl von Usern umfasst das Ermitteln der Aktivitäten der Vielzahl von Usern ein automatisches Überwachen zukünftig geplanter Aktivitäten der User, insbesondere einer Anwesenheit der User und/oder eine Erreichbarkeit der User. Falls ermittelt wird, dass bestimmte User abwesend oder nicht erreichbar sind, wird entsprechend ein Nutzungsverhalten der User bezüglich des Anwendungsprogramms ermittelt, wonach diese bestimmten User keine Bereitstellung des Anwendungsprogramms benötigen. Die Anwesenheit und Erreichbarkeit der User kann über eine Hinterlegung von Kalenderfunktionalitäten bestimmt werden. Hierbei können Wochenenden, Feiertage sowie betriebsinterne Ereignisse, etwa Betriebsausflüge, berücksichtigt werden. Weiter kann eine Anbindung an eine Personalverwaltungssoftware eingerichtet werden, sodass Urlaube, Krankheiten, Elternzeiten, Dienstreisen und dergleichen automatisch ausgelesen werden können. Eingaben derartiger Fehl- bzw. Abwesenheitszeiten können auch teilautomatisiert von Mitarbeitern eingegeben werden, etwa anhand von CSV-Listen.

Gemäß einer weiteren Ausführungsform des Verfahrens zum Bereitstellen eines Anwendungsprogramms an eine Vielzahl von Usern umfasst das Ermitteln der Aktivitäten der Vielzahl von Usern ein Empfangen einer Anfrage für eine Bereitstellung des Anwendungsprogramms von mindestens einem User über eine Benutzerschnittstelle. Die Anfrage kann sich insbesondere auf bestimmte Funktionalitäten des Anwendungsprogramms und/oder Angaben von mindestens einem Nutzungszeitraum beziehen, in welchem das Anwendungsprogramm bzw. die Funktionalitäten des Anwendungsprogramms bereitgestellt werden. Das prognostizierte Nutzungsverhaltens der User bezüglich des Anwendungsprogramms umfasst dann die Information, dass der User die angefragten Funktionalitäten in dem angefragten Nutzungszeitraum benutzen möchte.

Unter "Funktionalitäten" können beispielsweise bestimmte Komponenten des Anwendungsprogramms verstanden werden. Mögliche Funktionalitäten eines Office-Anwendungsprogramms umfassen etwa Textverarbeitungsprogramme, Tabellenverarbeitungsprogramme, Programme zur Email-Verwaltung, Kalender-Anwendungen und dergleichen.

Gemäß einer weiteren Ausführungsform des Verfahrens zum Bereitstellen eines Anwendungsprogramms an eine Vielzahl von Usern kann der User über eine App einzelne Lizenzen anfragen. Die Anfrage kann die Angabe bestimmter Funktionalitäten und/oder Nutzungszeiträume umfassen.

Gemäß einer weiteren Ausführungsform des Verfahrens zum Bereitstellen eines Anwendungsprogramms an eine Vielzahl von Usern umfasst das Prognostizieren eines Nutzungsverhaltens ein Ermitteln einer zu erwartenden Anzahl der User, welche in mindestens einem vorgegebenen Nutzungszeitraum das Anwendungsprogramm nutzen. Das Anfordern der Bereitstellung des Anwendungsprogramms umfasst eine Angabe einer Anzahl von Lizenzen für das Anwendungsprogramm, welche in Abhängigkeit von der zu erwartenden Anzahl der User, welche in mindestens einem vorgegebenen Nutzungszeitraum das Anwendungsprogramm nutzen, ermittelt wird.

Gemäß einer weiteren Ausführungsform des Verfahrens zum Bereitstellen eines Anwendungsprogramms an eine Vielzahl von Usern umfasst das Anwendungsprogramm eine Vielzahl von Funktionalitäten, wobei bereitzustellende Funktionalitäten des Anwendungsprogramms in Abhängigkeit von dem prognostizierten Nutzungsverhalten der User angefordert werden. Das prognostizierte Nutzungsverhalten kann beispielsweise Informationen über die Tätigkeiten und Aufgabenfelder der User umfassen. So kann für bestimmte User ermittelt werden, dass diese lediglich Zugriff auf Textbearbeitungsprogramme oder Kalender-Anwendungen erfordern, während weitere User zusätzlich oder alternativ Zugriff auf Datenbank-Anwendungen oder Programmier-Applikationen benötigen. Entsprechend werden auch nur die benötigten Funktionalitäten des Anwendungsprogramms angefordert.

Gemäß einer weiteren Ausführungsform des Verfahrens zum Bereitstellen eines Anwendungsprogramms an eine Vielzahl von Usern werden die bereitzustellenden Funktionalitäten weiter in Abhängigkeit von technischen Nutzerprofilen der User angefordert. Die Nutzerprofilen können insbesondere Informationen darüber enthalten, welche User auf welche Funktionalitäten des Anwendungsprogramms zugreifen. Weiter können Zeitinformationen enthalten sein, d.h. Informationen darüber, in welchem Zeitraum entsprechende Nutzer auf die entsprechenden Funktionalitäten zugreifen.

Gemäß einer weiteren Ausführungsform des Verfahrens zum Bereitstellen eines Anwendungsprogramms an eine Vielzahl von Usern können verschiedenen Usern in Abhängigkeit von dem prognostizierten Nutzungsverhalten der User verschiedene Funktionalitäten bereitgestellt werden. Beispielweise kann ein Mailpostfach samt Archiv allen Usern bereitgestellt werden, nicht jedoch die Telefonie-Funktionalität, welche nur bestimmten Usern bereitgestellt wird.

Gemäß einer weiteren Ausführungsform des Verfahrens zum Bereitstellen eines Anwendungsprogramms an eine Vielzahl von Usern werden beim Bereitstellen der Funktionalitäten Abhängigkeiten der Funktionalitäten des Anwendungsprogramms untereinander berücksichtigt. So können Produktabhängigkeitsmatrizen berechnet werden, welche die jeweiligen Abhängigkeiten spezifizieren. Etwa können bestimmte Funktionalitäten des Anwendungsprogramms nur dann ausgeführt werden, wenn weitere Funktionalitäten ebenfalls bereitgestellt werden.

Gemäß einer weiteren Ausführungsform des Verfahrens zum Bereitstellen eines Anwendungsprogramms an eine Vielzahl von Usern wird das Anfordern der Bereitstellung des Anwendungsprogramms von verteilten Instanzen aus durchgeführt. Bei den verteilten Instanzen kann es sich um physische Instanzen und/oder um virtuelle Instanzen handeln. Die verteilten Instanzen können sich beispielweise in verschiedenen Regionen oder Zeitzonen befinden oder können diesen zugeordnet werden. Insbesondere können die verteilten Instanzen mit verschiedenen Servern kommunizieren, welche das Anwendungsprogramm bereitstellen. Dadurch ist es möglich, eine bessere Verteilung der zu übertragenden Daten zu erreichen, sodass eine bessere Skalierung erreicht werden kann.

Das Anfordern der Lizenzen erfordert typischerweise Warteschlangen (Queues) mit einer Vielzahl paralleler Tasks, welche bei wachsender Anzahl der User gegebenenfalls exponentiell ansteigen können. Die Rückmeldungen der verschiedenen Schnittstellen bzw. Plattformen müssen korrekt interpretiert werden. Weiter sollten die Queues rechtzeitig vor Tageswechsel oder Arbeitsbeginn abgearbeitet werden, um Doppel- oder Unterlizenzierungen zu verhindern. Durch die Verwendung von mehreren parallelen Instanzen, wobei beispielsweise unterschiedliche Absender-Instanz-IDs eingesetzt werden, kann eine automatische Skalierung der Warteschlangen erzielt werden. Weiter können Prüfmechanismen zum Sicherstellen der korrekten Abarbeitung der Warteschlangen und der Provisionierung der Lizenzen eingerichtet werden.

Bei Verwendung mehrerer parallel geschalteter Plattformen kann möglicherweise die Geschwindigkeit der Reaktion auf die Buchungen der Lizenzen, d.h. auf das Anfordern der Bereitstellung des Anwendungsprogramms, beeinträchtigt werden. So kann die Userexperience verlangsamt werden, da jede Plattform ein Backlog und eine zusätzliche Queue erzeugt. Gemäß einer weiteren Ausführungsform des Verfahrens zum Bereitstellen eines Anwendungsprogramms an eine Vielzahl von Usern kann daher vorgesehen sein, Plattform- und User-Interfaces bereitzustellen, welche entkoppelt sind. Weiter kann die Virtualisierung von Tasks vorgesehen sein, welche das User-Interface als Erfolg vorzeitig ausgibt, falls ein Erfolg wahrscheinlich ist, um die Userexperience nicht zu gefährden.

Gemäß einer weiteren Ausführungsform des Verfahrens zum Bereitstellen eines Anwendungsprogramms an eine Vielzahl von Usern wird das Anfordern der Bereitstellung des Anwendungsprogramms weiter anhand von vorgegebenen Beschränkungskriterien beschränkt. Die Beschränkungskriterien umfassen insbesondere eine tatsächliche und/oder prognostizierte Zugriffsdauer auf das Anwendungsprogramm. Alternativ oder zusätzlich kann eine tatsächliche und/oder prognostizierte Anwesenheitsdauer der User berücksichtigt werden. Die Beschränkungskriterien können anhand gesetzlicher oder betrieblicher Vorgaben bestimmt werden. Insbesondere können Pausenzeiten zwischen Zugriffszeiten auf das Anwendungsprogramm vorgegeben werden. Der Zugriff auf das Anwendungsprogramm kann etwa auf bestimmte Wochentage beschränkt werden, beispielsweise ausschließlich auf Werktage. Insbesondere kann die Personalabteilung dadurch dabei unterstützt werden, eine optimale Work-Life-Balance für die Mitarbeiter zu ermöglichen, da durch einen Lizenzentzug sichergestellt wird, dass Mitarbeiter außerhalb der Arbeitszeiten nicht arbeiten. Die Bereitstellung des Anwendungsprogramms wird in diesem Fall auch nur für die tatsächlichen Zugriffszeiten angefordert. Sollte absehbar sein, dass auch innerhalb der Pausenzeiten auf das Anwendungsprogramm zugegriffen werden muss, etwa aufgrund besonderer betrieblicher Abläufe, kann vorgesehen sein, dass über eine App die Bereitstellung des Anwendungsprogramms manuell angefordert werden kann. Hierzu kann auch vorgesehen sein, dass bestimmte Zugriffsrechte erforderlich sind, um die Beschränkungskriterien außer Kraft zu setzen. Zusätzlich oder alternativ kann festgelegt werden, dass die Beschränkungskriterien auch nur temporär, d.h. für einen vorgegebenen Zeitraum außer Kraft gesetzt werden können.

Gemäß einer weiteren Ausführungsform des Verfahrens zum Bereitstellen eines Anwendungsprogramms an eine Vielzahl von Usern ist das Anwendungsprogramm ein cloudbasiertes Anwendungsprogramm. Insbesondere können den Usern Rechenzeiten auf Servern bereitgestellt werden. Die Ausführung des Anwendungsprogramms kann somit zumindest teilweise ausgelagert werden.

Gemäß einer weiteren Ausführungsform des Verfahrens zum Bereitstellen eines Anwendungsprogramms an eine Vielzahl von Usern werden Informationen bezüglich eines zeitlichen Verlaufs des Anforderns der Bereitstellung des Anwendungsprogramms gespeichert. Die Informationen beinhalten Angaben darüber, welche User in welchem Zeitraum auf welche Funktionalitäten des Anwendungsprogramms zugegriffen haben. Diese Informationen können vorteilhafterweise beim Prognostizieren des Nutzungsverhaltens der User verwendet werden. Aufgrund von Datenschutzbestimmungen kann vorgesehen sein, dass die gespeicherten Informationen möglichst pseudonymisiert werden, d.h. derartig gespeichert sind, dass eine direkte Zuordnung zu einem bestimmten User nicht oder nur schwer möglich ist. Insbesondere kann ein intelligentes Log-Management vorgesehen sein, welches ein automatisches, vorzugsweise KI-gestütztes, Clearing von Personendaten durchführt.

Falls mehrere Instanzen bzw. Plattformen in die Buchungen eingreifen können, etwa Kunden, Reseller, Hersteller und Distributoren, kann es möglicherweise zu Inkonsistenzen der Lizenzzuweisung kommen. Durch Monitoring kann vorgesehen sein, derartige Buchungsvorgänge frühzeitig zu erkennen und zu korrigieren. Beispielweise können durch KI-gestützte Verfahren bestimmte Fehlermuster bei den Buchungen erkannt werden. Es kann bewertet werden, ob die Buchungsvorgänge möglicherweise unplausibel oder gefährdend sind, sodass ansprechende Gegenmaßnahmen eingeleitet werden können.

Da bei verschiedenen Plattformen unterschiedliche Technologien eingesetzt werden können, ist vorzugsweise ein permanenter Abgleich der Entwicklung der Entwicklungsplattformen durchzuführen.

Gemäß einer weiteren Ausführungsform des Verfahrens zum Bereitstellen eines Anwendungsprogramms an eine Vielzahl von Usern werden mögliche Fehler beim Anfordern der Bereitstellung des Anwendungsprogramms durch KI-gestütztes Monitoring erkannt. Insbesondere kann überwacht werden, welchem User welche Funktionalitäten bereitgestellt werden sollen. Insbesondere unter Verwendung der technischen Nutzerprofile der User kann eine Plausibilisierung durchgeführt werden, ob eine derartige Zuteilung den technischen Abhängigkeiten genügt. Dadurch ist es möglich, frühzeitig Fehler, Overloads, Schnittstellenprobleme oder Abhängigkeitsverletzungen zu erkennen. Das Monitoring kann unter Verwendung von Machine-Learning-Modellen durchgeführt werden, wobei historische Daten und erkannte Fehler als Trainingsdaten eingesetzt werden können, um die Modelle zu trainieren. Insbesondere kann ein direktes Feedback der User oder ein geändertes Anfrageverhalten der User bezüglich der Bereitstellung des Anwendungsprogramms zur kontinuierlichen Verbesserung der Modelle herangezogen werden.

Allgemein können bei Verwendung mehrerer Schnittstellen bzw. Plattformen, etwa von dem Anbieter des Ermittlungsprogramms, einem Distributor und dem Dienstleister, welcher das Prognostizieren des Nutzungsverhaltens bereitstellt, Kapazitäts- oder Loadprobleme auftreten, welche von der Anzahl der Buchungen der Lizenzen abhängig sind. Die Anzahl der Buchungen hängt stark von der Buchungszeit ab, welche typischerweise zu Wochenbeginn oder zum Wochenende hin höher sein können als unter der Woche. Um die Skalierbarkeit zu gewähren, kann das Monitoring eine Simulation über eine hohe Anzahl von Buchungen von Lizenzen und entsprechender Task-Ausführungen durchführen. Die einzelnen Schnittstellen können Warnungen ausgeben, welche durch das KI-gestützte Monitoring gesammelt, aufbereitet, und weitergeleitet werden können. Weiter können gegebenenfalls automatisiert Maßnahmen eingeleitet werden. Weiter kann vorgesehen sein, die verschiedenen Schnittstellen durch Zwischenspeicherung von Lizenzierungsaufgaben in Queues zu entkoppeln.

Das KI-gestützte Monitoring kann weiter dazu ausgebildet sein, Nebeneffekte hinsichtlich Laufzeit und Sicherstellung der Buchungen zu überwachen und Eintrittswahrscheinlichkeiten für Ausfälle zu berechnen. Weiter können Grenzwerte bestimmt werden, bei welchen die Ausfälle zu erwarten sind, etwa Grenzwerte hinsichtlich Datum, Uhrzeit, Anzahl der Lizenzen, Tenantabhängigkeit und Ortsabhängigkeit.

Gemäß einer weiteren Ausführungsform des Verfahrens zum Bereitstellen eines Anwendungsprogramms an eine Vielzahl von Usern können statistische Verfahren verwendet werden, um das bisherige Nutzerverhalten zu analysieren. Insbesondere können Erwartungswerte für die Anzahl der benötigten Lizenzen ermittelt werden. Die Erwartungswerte können von den Jahreszeiten, Wochentagen und/oder Tageszeiten abhängen. Insbesondere können zusätzliche Lizenzen bereitgestellt werden, welche als Sicherheitspuffer dienen sollen, falls etwa eine als abwesend registrierte Person unerwartet Zugriff auf das Anwendungsprogramm erhalten möchte. Die statistische Auswertung kann auch für verschiedene Funktionalitäten des Anwendungsprogramms separat durchgeführt werden.

Gemäß einer weiteren Ausführungsform des Verfahrens zum Bereitstellen eines Anwendungsprogramms an eine Vielzahl von Usern werden Informationen bezüglich eines zeitlichen Verlaufs des Anforderns der Bereitstellung des Anwendungsprogramms gespeichert. Dies kann zur statistischen Auswertung des bisherigen Nutzerverhaltens dienen, wie dies oben genauer beschrieben wurde. Weiter dient die Speicherung des zeitlichen Verlaufs dem Zwecke der Abrechnung der tatsächlich vergebenen Lizenzen.

Gemäß einer weiteren Ausführungsform des Verfahrens zum Bereitstellen eines Anwendungsprogramms an eine Vielzahl von Usern kann die Anzahl der Lizenzen, d.h. die Anzahl der bereitzustellenden Instanzen des Anwendungsprogramms, derart gewählt werden, dass sie exakt einer anhand des prognostizierten Nutzungsverhaltens ermittelten Anzahl von benötigten Lizenzen entspricht. Es kann jedoch auch vorgesehen sein, eine gewisse Anzahl von zusätzlichen Lizenzen anzufordern, um unvorhergesehene Änderungen einzukalkulieren. Die Anzahl von zusätzlichen Lizenzen kann von einer Gesamtanzahl der bereitzustellenden Lizenzen abhängig sein. Bei einer größeren Anzahl von bereitzustellenden Lizenzen können etwa auch mehr zusätzliche Lizenzen angefordert werden.

Gemäß einer weiteren Ausführungsform des Verfahrens zum Bereitstellen eines Anwendungsprogramms an eine Vielzahl von Usern erfolgt das Prognostizieren des Nutzungsverhaltens und das entsprechende Bereitstellen des Anwendungsprogramms durch einen Distributor. Der Distributor erwirbt von einem Anbieter des Anwendungsprogramms eine Anzahl von Lizenzen und verteilt diese unter Verwendung des Verfahrens zum Bereitstellen des Anwendungsprogramms. Die Verwaltung der Lizenzen wird somit ausschließlich auf Seite des Distributors durchgeführt.

Anstelle eines Distributors kann auch der Anbieter des Anwendungsprogramms selbst das erfindungsgemäße Verfahren einsetzen.

Weiter kann vorgesehen sein, zumindest Teile des Verfahrens userseitig durchzuführen. Insbesondere kann eine Verwaltungssoftware oder App bereitgestellt werden, welche die Verwaltung der Lizenzen im Unternehmen ermöglicht. In diesem Fall kann die Pseudonymisierung der Daten vereinfacht werden oder gänzlich verzichtbar werden, insofern keine unternehmensinternen oder userspezifische Daten an den Distributor oder Anbieter des Anwendungsprogramms übertragen werden müssen.

Die Vorteile und Ausgestaltungen der Erfindung werden in der folgenden Beschreibung der Ausführungsbeispiele, wie sie in den Zeichnungen illustriert sind, näher erläutert.

Es zeigen:
- Fig. 1: ein schematisches Blockschaltbild eines Systems zum Bereitstellen eines Anwendungsprogramms an eine Vielzahl von Usern gemäß einer ersten Ausführungsform der Erfindung;
- Fig. 2: ein schematisches Blockschaltbild eines Systems zum Bereitstellen eines Anwendungsprogramms an eine Vielzahl von Usern gemäß einer zweiten Ausführungsform der Erfindung;
- Fig. 3: ein schematisches Blockschaltbild eines Systems zum Bereitstellen eines Anwendungsprogramms an eine Vielzahl von Usern gemäß einer dritten Ausführungsform der Erfindung;
- Fig. 4: ein schematisches Blockschaltbild eines Systems zum Bereitstellen eines Anwendungsprogramms an eine Vielzahl von Usern gemäß einer vierten Ausführungsform der Erfindung;
- Fig. 5: ein schematisches Blockschaltbild eines Systems zum Bereitstellen eines Anwendungsprogramms an eine Vielzahl von Usern gemäß einer fünften Ausführungsform der Erfindung;
- Fig. 6: ein schematisches Flussdiagramm eines Verfahrens zum Bereitstellen eines Anwendungsprogramms an eine Vielzahl von Usern gemäß einer Ausführungsform der Erfindung;
- Fig. 7: ein schematisches Blockdiagramm eines Computerprogrammprodukts gemäß einer Ausführungsform der Erfindung; und
- Fig. 8: ein schematisches Blockdiagramm eines nichtflüchtigen, computerlesbaren Speichermediums gemäß einer Ausführungsform der Erfindung.

### Detaillierte Figurenbeschreibung

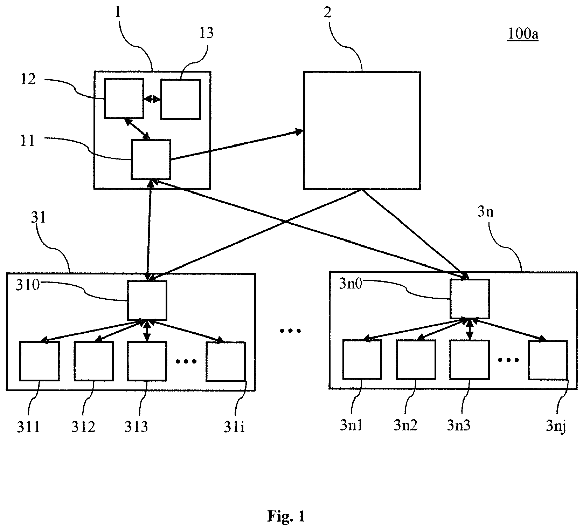

Figur 1 zeigt ein schematisches Blockschaltbild eines Systems 100a zum Bereitstellen eines Anwendungsprogramms an eine Vielzahl von Usern 311 bis 3nj. Das System 100a umfasst eine Vorrichtung 1 zum Anfordern einer Bereitstellung des Anwendungsprogramms und einen Server 2, welcher das Anwendungsprogramm wie angefordert bereitstellt. Das Anwendungsprogramm kann hierzu eine Vielzahl von Funktionalitäten umfassen. Weiter handelt es sich bei dem Anwendungsprogramm vorzugsweise um ein cloudbasiertes Anwendungsprogramm.

Die Vorrichtung 1 umfasst eine Schnittstelle 11, welche mit entsprechenden Schnittstellen 310 bis 3n0 von einer Vielzahl n von Clients 31 bis 3n gekoppelt ist. Die Clients 31 bis 3n entsprechen beispielweise Unternehmen mit mehreren Mitarbeitern und entsprechenden Arbeitsplätzen oder Zugriffsgeräten bzw. -instanzen, von welchen aus auf das Anwendungsprogramm zugegriffen werden kann. Jedem Client 31 bis 3n ist eine Vielzahl i bis j von Usern 311 bis 31i, 3n1 bis 3nj, zugeordnet, welche insbesondere einer Vielzahl von Mitarbeitern, Zugriffsgeräten und/oder Zugriffsinstanzen entsprechen können. Die Anzahl der User 311 bis 3nj kann für jeden Client 31 bis 3n fest vorgegeben sein, kann jedoch typischerweise auch variabel sein, da sich die Anzahl der Mitarbeiter, Zugriffsgeräte bzw. Zugriffsinstanzen im Allgemeinen ändern kann.

Die Schnittstellen 310 bis 3n0 der Clients 31 bis 3n können Hardware- und Softwarekomponenten umfassen, darunter etwa eine App, über welche Daten eingelesen, verarbeitet und übertragen werden können. Die Schnittstellen 310 bis 3n0 können insbesondere Zugriff auf Personalverwaltungsprogramme des jeweiligen Unternehmens haben, um Aktivitäten der User 311 bis 3nj zu ermitteln. So kann die Anwesenheit oder Abwesenheit der jeweiligen User 311 bis 3nj von der App ausgelesen werden. Hierbei können Wochenenden, Feiertage, Urlaube, Dienstreisen, Krankheitstage, Elternzeiten und Ähnliches berücksichtigt werden, welche für eine Berechnung des Bedarfs an Lizenzen des Anwendungsprogramms relevant sind. Neben derartigen Daten, welche die aktuelle und/oder zukünftige Anwesenheit und/oder Erreichbarkeit der User 311 bis 3nj betreffen, können weiter technische Nutzerprofile der User 311 bis 3nj ermittelt werden, wobei insbesondere die von den einzelnen Usern 311 bis 3nj benötigten Funktionalitäten des Anwendungsprogramms sowie gegebenenfalls entsprechende Abhängigkeiten der Funktionalitäten erfasst werden.

Die Schnittstellen 310 bis 3n0 der Clients 31 bis 3n kommunizieren mit der Schnittstelle 11 der Vorrichtung 1 und übertragen die ermittelten Daten hinsichtlich der Aktivitäten der User 311 bis 3nj, im Folgenden als "Aktivitätsdaten" bezeichnet, an die Schnittstelle 11 der Vorrichtung 1. Die Schnittstellen 310 bis 3n0 der Clients 31 bis 3n und die Schnittstelle 11 der Vorrichtung 1 können beispielsweise dazu ausgebildet sein, über eine Netzwerkverbindung, insbesondere eine Internetverbindung, oder eine WLAN-, Bluetooth-, Profibus-, Ethernet-Verbindung oder ähnliches zu kommunizieren. Neben drahtlosen Verbindungen können die Schnittstellen 310 bis 3n0 der Clients 31 bis 3n und die Schnittstelle 11 der Vorrichtung 1 auch zumindest teilweise über elektrische oder optische Kabelverbindungen miteinander kommunizieren.

Die Vorrichtung 1 umfasst weiter eine Recheneinrichtung 12 sowie einen Speicher 13, um die bereitgestellten Aktivitätsdaten zu verarbeiten. Die Recheneinrichtung 12 kann eine Vielzahl von Software- und/oder Hardwarekomponenten umfassen, etwa CPUs (englisch: central processing unit), GPUs (englisch: graphics processing unit), Mikrokontroller, integrierte Schaltkreise (englisch: integrated circuits), ASICs (englisch: application-specific integrated circuits), FPGAs (englisch: field programmable gate array) oder dergleichen.

Bei dem Speicher 13 kann es sich um einen oder um mehrere flüchtige oder nicht-flüchtige Speicher handeln, etwa eine Festplatte, Speicherkarte oder Ähnliches. Auf dem Speicher 13 können Programmanweisungen abgelegt sein, welche die Recheneinrichtung 12 zum Auswerten der bereitgestellten Aktivitätsdaten umsetzt. Weiter können die bereitgestellten Aktivitätsdaten zumindest teilweise in dem Speicher 13 abgelegt werden. Die Daten werden hierzu vorzugsweise verschlüsselt. Weiter kann die Recheneinrichtung 12 dazu ausgebildet sein, die Daten vor dem Ablegen im Speicher 13 zu pseudonymisieren, um eine direkte Zuordnung zu bestimmten Usern 311 bis 3nj zu verhindern. Dies kann insbesondere hinsichtlich gesetzlicher Vorgaben, etwa Datenschutzverordnungen, erforderlich sein.

Die Recheneinrichtung 12 ist dazu ausgebildet, anhand der Aktivitätsdaten ein Nutzungsverhalten der User 311 bis 3nj bezüglich des Anwendungsprogramms zu ermitteln. Hierzu kann die Recheneinrichtung 12 eine zu erwartende Anzahl der User 311 bis 3nj berechnen, welche in einem vorgegebenen Nutzungszeitraum das Anwendungsprogramm voraussichtlich nutzen wird. Der Nutzungszeitraum kann fest vorgegeben sein, etwa der folgende Tag, die folgende Woche oder der Folgemonat. Der Nutzungszeitraum kann auch variabel gewählt werden. Anhand der zu erwartenden Anzahl der User 311 bis 3nj ermittelt die Recheneinrichtung 12 die Anzahl von Lizenzen, welche in dem Nutzungszeitraum angefordert werden sollen. Die Recheneinrichtung 12 kann hierbei zusätzliche Lizenzen berücksichtigen, welche als Reserve dienen, um zu einzukalkulieren, dass User 311 bis 3nj das Anwendungsprogramm unvorhergesehen benötigen.

Die Recheneinrichtung 12 kann weiter anhand des prognostizierten Nutzungsverhaltens der User 311 bis 3nj die Funktionalitäten des Anwendungsprogramms ermitteln, welche bereitgestellt werden sollen. Hierbei kann die Recheneinrichtung 12 Abhängigkeiten der Funktionalitäten des Anwendungsprogramms untereinander berücksichtigen. Die Funktionalitäten können in Form von Produktabhängigkeitsmatrizen im Speicher 13 der Vorrichtung 1 abgelegt sein.

Weiter kann die Recheneinrichtung 12 dazu ausgebildet sein, die berechnete Anzahl von Lizenzen, welche der Server 2 den Usern 311 bis 3nj bereitstellen soll, vor dem tatsächlichen Anfordern zuerst an die Schnittstellen 310 bis 3n0 der Clients 31 bis 3n zu übermitteln. Ein Anwender kann die berechnete Anzahl überprüfen und gegebenenfalls korrigieren, falls diese unplausibel erscheint. So kann die berechnete Anzahl reduziert werden oder der Anwender kann zusätzliche Lizenzen anfordern. Dadurch ist es möglich, manuell Situationen zu berücksichtigen, bei welchen bei der automatisch berechneten Anzahl bestimmte Einflussfaktoren nicht berücksichtigt wurden.

Optional kann weiter vorgesehen sein, dass die App eine Rückmeldung von den Schnittstellen 310 bis 3n0 der Clients 31 bis 3n an die Schnittstelle 11 der Vorrichtung 1 übermittelt wird. Die Rückmeldung kann Informationen beinhalten, inwiefern die berechnete Anzahl korrigiert werden muss und kann insbesondere Informationen umfassen, welche weiteren Einflussfaktoren zukünftig berücksichtigt werden sollen. Diese Informationen können bei zukünftigen Berechnungen durch die Recheneinrichtung 12 herangezogen werden. Insbesondere können die Algorithmen angepasst werden, um die Genauigkeit der berechneten Lizenzen zu verbessern.

Zusätzlich kann vorgesehen sein, dass über die Schnittstellen 310 bis 3n0 der Clients 31 bis 3n eine beliebige weitere Anzahl an Lizenzen angefordert werden kann. Etwa kann in einer App, welche mit der Schnittstelle 11 der Vorrichtung 1 kommuniziert, eine Option vorgesehen sein, welche eine derartige manuelle Zubuchung von Lizenzen ermöglicht.

Über die App können weiter Beschränkungskriterien vorgegeben werden, welche die bereitzustellenden Instanzen bzw. Lizenzen des Anwendungsprogramms beschränken. Die Beschränkungskriterien können für jeden User 311 bis 3nj oder für Gruppen von Usern 311 bis 3nj unterschiedlich gewählt werden. So kann für User 311 bis 3nj mit einer bestimmten vertraglich vereinbarten Wochenarbeitszeit vorgegeben werden, dass die Nutzungsdauer des Anwendungsprogramms einen von der vereinbarten Wochenarbeitszeit abhängigen Schwellenwert nicht überschreiten darf. Darüber hinaus kann die Nutzung des Anwendungsprogramms zeitlich eingeschränkt werden. So kann vorgegeben werden, dass die Zeitdifferenz des Zugriffs auf das Anwendungsprogramm an aufeinanderfolgenden Tagen einen vorgegebenen Schwellenwert überschreiten muss. Dadurch werden gesetzlich vorgeschriebene Pausenzeiten berücksichtigt. Weitere Pausenzeiten, etwa zur Mittagszeit können berücksichtigt werden. So kann vorgegeben werden, dass in einem bestimmten Zeitfenster die Nutzung für mindestens einen vorgegebenen Zeitraum unterbrochen werden muss. Bei der Bereitstellung der Lizenz kann eine derartige flexible Pausenzeit berücksichtigt werden. Allgemein berücksichtigt die Recheneinrichtung 12 beim Prognostizieren des Nutzungsverhaltens die vorgegebenen Beschränkungskriterien und reduziert die Nutzungszeit, d.h. die Zeit, in welcher das Anwendungsprogramm bereitgestellt werden soll, entsprechend.

Die Recheneinrichtung 12 fordert eine entsprechende Bereitstellung des Anwendungsprogramms für die User 311 bis 3nj über die Schnittstelle 11 bei dem Server 2 an, welcher das Anwendungsprogramm bereitstellt. Der Server 2 stellt den Usern 311 bis 3nj die angeforderte Anzahl von Lizenzen bereit, und ermöglicht somit den Zugriff auf das Anwendungsprogramm durch die User 311 bis 3nj. Der Server 2 kann insbesondere nur diejenigen Funktionalitäten des Anwendungsprogramms bereitstellen, welche von der Vorrichtung 1 angefordert wurden.

Die Recheneinrichtung 12 kann weiter Informationen bezüglich des prognostizierten Nutzungsverhaltens der User 311 bis 3nj sowie bezüglich der angeforderten bereitzustellenden Anwendungsprogramme speichern. Insbesondere können in dem Speicher 13 Informationen abgelegt werden, inwiefern welcher der User 311 bis 3nj auf welche Funktionalitäten des Anwendungsprogramms Zugriff erhalten hat. Weiter kann eine Gesamtzahl der bereitzustellenden Lizenzen vermerkt werden. Anhand der gespeicherten Informationen kann die Recheneinrichtung 12 Abrechnungsinformationen an die Schnittstellen 310 bis 3n0 übermitteln. Die gespeicherten Informationen dienen insbesondere der Dokumentation der Abrechnung.

Die gespeicherten Informationen können weiter zur Erkennung möglicher Fehler ausgewertet werden. Die Recheneinrichtung 12 kann dazu ausgebildet sein, ein KI-gestütztes Monitoring durchzuführen, etwa unter Verwendung von Machine-Learning-Modellen, welche anhand von früheren Use Cases trainiert werden. Als Trainingsdaten können frühere Nutzungsverhalten der User als Input und entsprechende Lizenzzahlen sowie Anzahl und Art der Funktionalitäten, welche bereitgestellt wurden, als Output (Label) verwendet werden. Die Machine-Learning-Modelle können das von der Recheneinrichtung 12 prognostizierte Nutzungsverhalten plausibilisieren. Weiter kann das KI-gestütztes Monitoring mögliche Overloads, Schnittstellenprobleme oder Abhängigkeitsverletzungen erkennen.

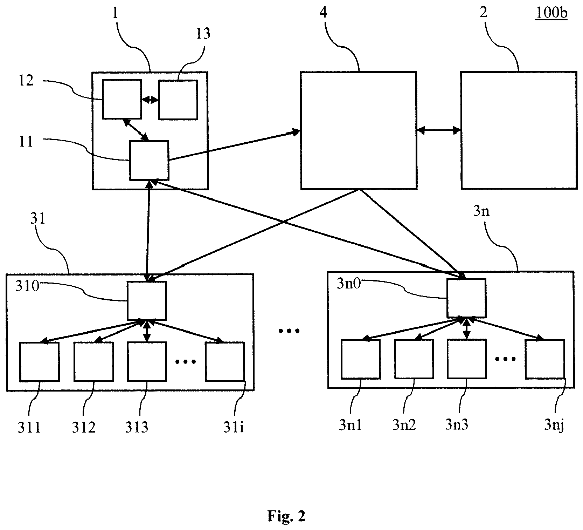

Figur 2 zeigt ein schematisches Blockschaltbild eines weiteren Systems 100b zum Bereitstellen eines Anwendungsprogramms an eine Vielzahl von Usern 311 bis 3nj. Das System 100b entspricht im Wesentlichen der in Figur 1 illustrierten Ausführungsform, sodass die identischen Merkmale nicht erneut erläutert werden. Das System 100b unterscheidet sich durch einen zusätzlichen Distributor 4, welcher zwischen die Vorrichtung 1 und den Server 2 geschaltet ist. Der Distributor 4 erwirbt Lizenzen bei dem Anbieter des Anwendungsprogramms über den Server 2. Die Vorrichtung 1 fordert die Bereitstellung des Anwendungsprogramms für die User 311 bis 3nj bei dem Distributor 4 an welcher das Anwendungsprogramm gemäß der von der Vorrichtung 1 angegebenen Spezifikationen den Usern 311 bis 3nj über die Schnittstellen 310 bis 3n0 der Clients 31 bis 3n bereitstellt.

Gemäß der in Figur 2 illustrierten Ausführungsform gibt es neben dem Anbieter des Anwendungsprogramms (Server 2) somit einen Distributor 4 sowie einen Dienstleister, welche das Nutzungsverhalten prognostiziert und die bereitzustellenden Lizenzen entsprechend berechnet und anfordert (Vorrichtung 1).

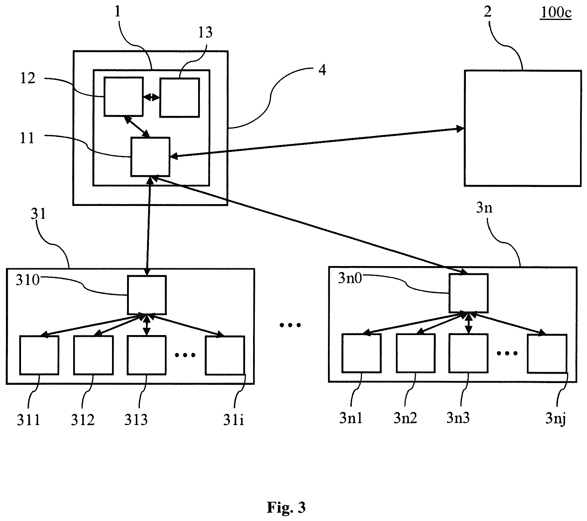

Bei dem in Figur 3 illustrierten System 100c erfolgt das Prognostizieren des Nutzungsverhaltens und das Bereitstellen der Lizenzen durch den Distributor 4 selbst. Der Distributor 4 umfasst somit die Vorrichtung 1. Die Lizenzen werden den Usern 311 bis 3nj über die Schnittstelle 11 der Vorrichtung 1 bereitgestellt.

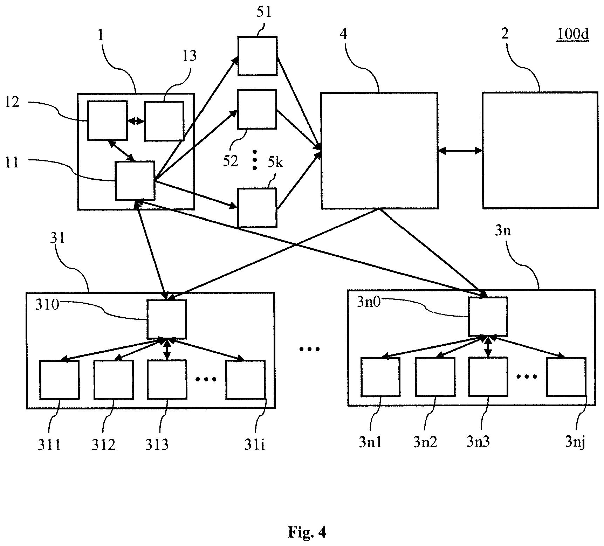

Figur 4 zeigt ein schematisches Blockschaltbild eines weiteren Systems 100d zum Bereitstellen eines Anwendungsprogramms an eine Vielzahl von Usern 311 bis 3nj. Hierbei wird eine Vielzahl k von zusätzlichen Instanzen 51 bis 5k generiert, welche mit der Schnittstelle 11 der Vorrichtung 1 und mit dem Distributor 4 gekoppelt sind. Bei den Instanzen 51 bis 5k kann es sich um physikalische oder virtuelle Instanzen handeln, welche sich vorzugsweise in verschiedenen Regionen, etwa verschiedenen Zeitzonen, befinden oder diesen zugeordnet sind. Die Anfrage bezüglich der Bereitstellung des Anwendungsprogramms erfolgt über die Vielzahl der Instanzen 51 bis 5k. Dadurch können eine bessere Verteilung und eine bessere Skalierung erzielt werden. Gemäß einer weiteren Ausführungsform kann vorgesehen sein, dass die Instanzen 51 bis 5k zwischen Distributor 4 und Server 2 geschaltet sind.

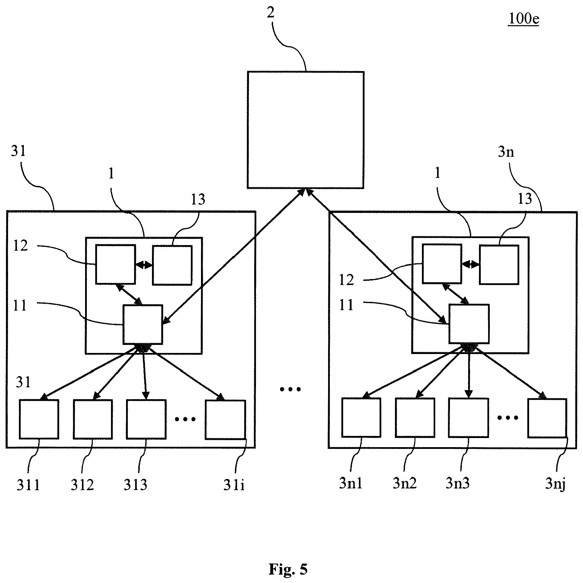

Figur 5 zeigt ein schematisches Blockschaltbild eines weiteren Systems 100e zum Bereitstellen eines Anwendungsprogramms an eine Vielzahl von Usern 311 bis 3nj. Gemäß dieser Ausführungsform ist jedem Client 31 bis 3n eine jeweilige Instanz der Vorrichtung 1 zugeordnet. Dadurch bleiben die Daten beim Client 31 bis 3n selbst und müssen nicht an einen weiteren Dienstleister übertragen werden. Die Vorrichtung 1 eines jeden Clients 31 bis 3n fordert die Daten direkt beim Server 2 an. Auf die zusätzliche Schnittstelle 310 bis 3n0 kann verzichtet werden.

Die Erfindung ist nicht auf die gezeigten Ausführungsformen beschränkt. Insbesondere können einer der Funktionen und Berechnungen lokal beim Client 31 bis 3n durchgeführt werden, während andere Funktionen und Berechnungen ausgelagert sein können. Insbesondere kann ein Cloud Service bereitgestellt werden, welche das Prognostizieren des Nutzungsverhaltens der User und das Anfordern der Bereitstellung des Anwendungsprogramms zumindest teilweise übernimmt.

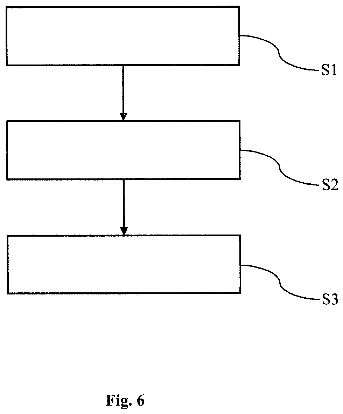

Figur 6 zeigt ein schematisches Flussdiagramm eines Verfahrens zum Bereitstellen eines Anwendungsprogramms an eine Vielzahl von Usern 311 bis 3nj. Das Verfahren kann durch eines der oben beschriebenen Systeme 100a bis 100e durchgeführt werden.

In einem ersten Verfahrensschritt S1 werden Aktivitäten der User 311 bis 3nj ermittelt. Hierzu können insbesondere zukünftig geplante Aktivitäten der User 311 bis 3nj automatisch überwacht werden. Etwa durch Auswerten von Personalmanagement-Datenbanken können die An- und Abwesenheiten der User 311 bis 3nj ermittelt werden, wobei etwa Urlaubszeiten, Krankheitszeiten, Dienstreisen oder gleichen berücksichtigt werden können.

Das Ermitteln der Aktivitäten der User 311 bis 3nj kann alternativ oder zusätzlich anhand von Nutzereingaben erfolgen. So kann ein Nutzer eine gezielte Anfrage für eine Bereitstellung des Anwendungsprogramms übermitteln, d.h. angeben, dass mindestens einer der User 311 bis 3nj in einem vorgegebenen Zeitraum bestimmte Funktionalitäten des Anwendungsprogramms benötigt. Weiter können technische Nutzerprofilen der User 311 bis 3nj erzeugt oder bereitgestellt werden.

Anhand derartiger Aktivitäten der User 311 bis 3nj wird in einem zweiten Verfahrensschritt S2 ein Nutzungsverhalten der User 311 bis 3nj prognostiziert. Insbesondere kann ermittelt werden, wie viele User 311 bis 3nj in vorgegebenen Nutzungszeiträumen das Anwendungsprogramm voraussichtlich nutzen. Darüber hinaus kann die Art der Nutzung ermittelt werden, insbesondere welche Funktionalitäten benötigt werden. Beim Prognostizieren des Nutzungsverhaltens der User 311 bis 3nj können die technischen Nutzerprofile berücksichtigt werden. Insbesondere können Abhängigkeiten der technischen Nutzerprofile berücksichtigt werden.

In einem dritten Verfahrensschritt S3 wird eine Bereitstellung des Anwendungsprogramms für die User 311 bis 3nj in Abhängigkeit von dem prognostizierten Nutzungsverhalten der User 311 bis 3nj bei einem Server 2 angefordert. Hierzu werden insbesondere die Anzahl der benötigten Lizenzen für das Anwendungsprogramm und gegebenenfalls die Art und Anzahl der Funktionalitäten des Anwendungsprogramms übermittelt. Weiter können Informationen bezüglich der Zeiträume, in welchen das Anwendungsprogramm oder Funktionalitäten des Anwendungsprogramms bereitgestellt werden sollen, übertragen werden. Der Server 2 stellt das Anwendungsprogramm anhand der durch das prognostizierte Nutzungsverhalten der User 311 bis 3nj vorgegebenen Spezifikationen den Usern 311 bis 3nj bereit. Die Bereitstellung kann auch mittelbar erfolgen, d.h. über einen zwischengeschalteten Distributor 4.

Falls das Anwendungsprogramm eine Vielzahl von Funktionalitäten aufweist, können die Funktionalitäten des Anwendungsprogramms sowie deren Abhängigkeiten beim Prognostizieren des Nutzungsverhaltens und beim entsprechenden Anfordern der Bereitstellung des Anwendungsprogramms berücksichtigt werden.

Weiter kann vorgesehen sein, das Anfordern der Bereitstellung des Anwendungsprogramms von verteilten Instanzen aus durchzuführen.

Weiter kann vorgesehen sein, die Bereitstellung des Anwendungsprogramms anhand von Beschränkungskriterien einzuschränken. Die Beschränkungskriterien können von Usern 311 bis 3nj oder von zentralen Schnittstellen 310 bis 3n0 von Clients bzw. Unternehmen 31 bis 3n selbständig vorgenommen werden. Über eine App können beispielweise Zeitfenster vorgegeben werden, in welchen ein Zugriff auf das Programm nicht möglich sein soll. Die Beschränkungskriterien können weiter von einem Benutzer manuell aufgehoben werden, indem etwa über die App der Zugriff auch innerhalb der allgemein ausgeschlossen Zeitfenster ermöglicht werden kann.

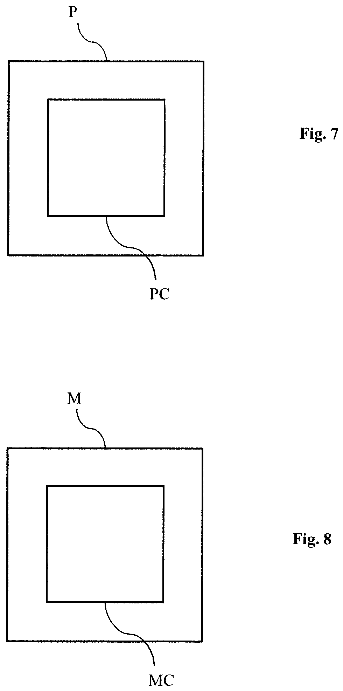

Figur 7 zeigt ein schematisches Blockdiagramm eines Computerprogrammprodukts P mit ausführbarem Programmcode PC. Der ausführbare Programmcode PC ist dazu ausgebildet, beim Ausführen auf einem Computer das oben beschriebene Verfahren zum Bereitstellen eines Anwendungsprogramms an eine Vielzahl von Usern durchzuführen.

Figur 8 zeigt ein schematisches Blockdiagramm eines nichtflüchtigen, computerlesbaren Speichermediums M mit ausführbarem Programmcode MC, dazu ausgebildet, beim Ausführen auf einem Computer das oben beschriebene Verfahren zum Bereitstellen eines Anwendungsprogramms an eine Vielzahl von Usern durchzuführen.

Während die Erfindung durch die bevorzugten Ausführungsformen näher erläutert wurde, ist die Erfindung nicht auf die offenbarten Ausführungsformen begeschränkt und weitere Variationen können vom Fachmann abgeleitet werden, ohne den Schutzumfang der Erfindung zu verlassen.

### Bezugszeichenliste

- 1: Vorrichtung zum Anfordern einer Bereitstellung eines Anwendungsprogramms
- 2: Server
- 4: Distributor
- 11: Schnittstelle der Vorrichtung 1
- 12: Recheneinrichtung
- 13: Speicher
- 31-3n: Clients
- 51-5k: Instanzen
- 100a-d: System zum Bereitstellen eines Anwendungsprogramms
- 310-3n0: Schnittstellen der Clients 31-3n
- 311-3nj: User
- M: Speichermedium
- MC: Programmcode
- P: Computerprogrammprodukt
- PC: Programmcode
- S1-S3: Verfahrensschritte

## Patentansprüche

1. Computerimplementiertes Verfahren zum Bereitstellen eines Anwendungsprogramms an eine Vielzahl von Usern (311-31i, 3n1-3nj), mit den Schritten:
Ermitteln von Aktivitäten der Vielzahl von Usern (311-31i, 3n1-3nj);
Prognostizieren eines Nutzungsverhaltens der User (311-31i, 3n1-3nj) bezüglich des Anwendungsprogramms anhand der ermittelten Aktivitäten der User (311-31i, 3n1-3nj); und
Anfordern einer Bereitstellung des Anwendungsprogramms für die User (311-31i, 3n1-3nj) in Abhängigkeit von dem prognostizierten Nutzungsverhalten der User (311-31i, 3n1-3nj).

2. Verfahren nach Anspruch 1, wobei das Ermitteln der Aktivitäten der Vielzahl von Usern (311-31i, 3n1-3nj) ein automatisches Überwachen zukünftig geplanter Aktivitäten der User (311-31i, 3n1-3nj) umfasst, insbesondere eine Anwesenheit der User (311-31i, 3n1-3nj) und/oder eine Erreichbarkeit der User (311-31i, 3n1-3nj).

3. Verfahren nach Anspruch 1 oder 2, wobei das Ermitteln der Aktivitäten der Vielzahl von Usern (311-31i, 3n1-3nj) ein Empfangen einer Anfrage für eine Bereitstellung des Anwendungsprogramms von mindestens einem User (311-31i, 3n1-3nj) über eine Benutzerschnittstelle (11) umfasst.

4. Verfahren nach einem der vorangehenden Ansprüche,
wobei das Prognostizieren eines Nutzungsverhaltens ein Ermitteln einer zu erwartenden Anzahl der User (311-31i, 3nl-3nj) umfasst, welche in mindestens einem vorgegebenen Nutzungszeitraum das Anwendungsprogramm nutzen; und
wobei das Anfordern der Bereitstellung des Anwendungsprogramms eine Angabe der Anzahl von Lizenzen für das Anwendungsprogramm umfasst, in Abhängigkeit von der zu erwartenden Anzahl der User (311-31i, 3n1-3nj), welche in dem mindestens einen vorgegebenen Nutzungszeitraum das Anwendungsprogramm nutzen.

5. Verfahren nach einem der vorangehenden Ansprüche, wobei das Anwendungsprogramm eine Vielzahl von Funktionalitäten umfasst, und wobei bereitzustellende Funktionalitäten des Anwendungsprogramms in Abhängigkeit von dem prognostizierten Nutzungsverhalten der User (311-31i, 3n1-3nj) angefordert werden.

6. Verfahren nach Anspruch 5, wobei die bereitzustellenden Funktionalitäten weiter in Abhängigkeit von technischen Nutzerprofilen der User (311-31i, 3n1-3nj) angefordert werden.

7. Verfahren nach Anspruch 5 oder 6, wobei verschiedenen Usern (311-31i, 3n1-3nj) in Abhängigkeit von dem prognostizierten Nutzungsverhalten der User (311-31i, 3n1-3nj) verschiedene Funktionalitäten bereitgestellt werden können.

8. Verfahren nach einem der Ansprüche 5 bis 7, wobei beim Bereitstellen der Funktionalitäten Abhängigkeiten der Funktionalitäten des Anwendungsprogramms untereinander berücksichtigt werden.

9. Verfahren nach einem der vorangehenden Ansprüche, wobei das Anfordern der Bereitstellung des Anwendungsprogramms von verteilten Instanzen aus durchgeführt wird.

10. Verfahren nach einem der vorangehenden Ansprüche, wobei das Anfordern der Bereitstellung des Anwendungsprogramms weiter anhand von vorgegebenen Beschränkungskriterien beschränkt wird, wobei die Beschränkungskriterien insbesondere eine tatsächliche und/oder prognostizierte Zugriffsdauer auf das Anwendungsprogramm und/oder eine tatsächliche und/oder prognostizierte Anwesenheitsdauer der User (311-31i, 3n1-3nj) umfasst.

11. Verfahren nach einem der vorangehenden Ansprüche, wobei mögliche Fehler beim Anfordern der Bereitstellung des Anwendungsprogramms durch KI-gestütztes Monitoring erkannt werden.

12. Vorrichtung (1) zum Anfordern einer Bereitstellung eines Anwendungsprogramms an eine Vielzahl von Usern (311-31i, 3n1-3nj), mit:
einer Schnittstelle (11), welche zum Empfangen von Daten bezüglich einer Vielzahl von Usern (311-31i, 3n1-3nj) ausgebildet ist; und
einer Recheneinrichtung (12), welche dazu ausgebildet ist:
- Aktivitäten der Vielzahl von Usern (311-31i, 3n1-3nj) anhand der über die Schnittstelle (11) empfangenen Daten zu ermitteln;
- ein Nutzungsverhaltens der User (311-31i, 3n1-3nj) bezüglich des Anwendungsprogramms anhand der ermittelten Aktivitäten der User (311-31i, 3n1-3nj) zu prognostizieren; und
- eine Bereitstellung des Anwendungsprogramms für die User (311-31i, 3n1-3nj) in Abhängigkeit von dem prognostizierten Nutzungsverhalten der User (311-31i, 3n1-3nj) anzufordern.

13. System (100a; 100b; 100c; 100d) zum Bereitstellen eines Anwendungsprogramms an eine Vielzahl von Usern (311-31i, 3n1-3nj), mit:
mindestens einer Vorrichtung (1) zum Anfordern einer Bereitstellung eines Anwendungsprogramms an eine Vielzahl von Usern (311-31i, 3n1-3nj) nach Anspruch 12, und
einem Server (2), welcher dazu ausgebildet ist, mit der Vorrichtung (1) zu kommunizieren, wobei die Vorrichtung (1) dazu ausgebildet ist, die Bereitstellung des Anwendungsprogramms für die User (311-31i, 3n1-3nj) in Abhängigkeit von dem prognostizierten Nutzungsverhalten der User (311-31i, 3n1-3nj) bei dem Server (2) anzufordern, und wobei der Server (2) weiter dazu ausgebildet ist, das Anwendungsprogramm den Usern (311-31i, 3n1-3nj) wie von der Vorrichtung (1) angefordert bereitzustellen.

14. Computerprogrammprodukt (P) mit ausführbarem Programmcode (PC), dazu ausgebildet, beim Ausführen auf einem Computer das Verfahren gemäß einem der Ansprüche 1 bis 11 auszuführen.

15. Nichtflüchtiges, computerlesbares Speichermedium (M) mit ausführbarem Programmcode (MC), dazu ausgebildet, beim Ausführen auf einem Computer das Verfahren gemäß einem der Ansprüche 1 bis 11 auszuführen.
